# FASCICULE DE BREVET EUROPEEN

(11) **EP 1 208 119 B1**
(45) Date de publication et mention de la délivrance du brevet: **17.08.2011**
(21) Numéro de dépôt: 00960768.0
(22) Date de dépôt: 31.08.2000
(51) Int. Cl.: C08F 8/12, C08F 293/00

(54) **COMPOSITION AQUEUSE GELIFIEE COMPORTANT UN COPOLYMERE A BLOCS COMPRENANT AU MOINS UN BLOC HYDROSOLUBLE ET UN BLOC HYDROPHOBE**
WÄSSRIGE GELARTIGE ZUSAMMENSETZUNGEN AUF BASIS VON BLOCKCOPOLYMEREN MIT HYDROPHILEN UND HYDROPHOBEN BLÖCKEN
AQUEOUS GELLED COMPOSITION COMPRISING A BLOCK COPOLYMER INCLUDING AT LEAST A WATER SOLUBLE BLOCK AND A HYDROPHOBIC BLOCK

(30) Priorité: 01.09.1999 US 387487
(43) Date de publication de la demande: 29.05.2002
(73) Titulaire: RHODIA CHIMIE, 92512 Boulogne Billancourt Cedex (FR)
(72) Inventeur: DESTARAC, Mathias, F-75013 Paris (FR); REEB, Roland, F-77410 Gressy (FR); JOANICOT, Mathieu, Lawrenceville, NJ 08648 (US)
(86) Numéro de dépôt international: PCT/FR2000/002411
(87) Numéro de publication internationale: WO 2001/016187

(56) Documents cités:
- EP-A- 0 296 850
- EP-A- 0 349 232
- EP-A- 0 887 362
- WO-A-92/07014
- WO-A-92/13903
- FR-A- 2 773 161
- US-A- 5 219 945
- US-A- 5 856 409

## Description

La présente invention concerne une solution ou composition aqueuse gélifiée comportant un copolymère a blocs comprenant au moins un bloc hydrosoluble et un bloc hydrophobe.

Les molécules amphiphiles sont des molécules présentant des zones de solubilité dans l'eau différentes, qui leur confèrent des propriétés particulières. Un exemple de molécule amphiphile connu est celui des agents tensio-actifs qui peuvent présenter une zone hydrophile et une zone hydrophobe.

Du fait de leur caractère amphiphile, ces molécules s'assemblent et s'organisent en solution dans l'eau pour former des micelles. Ces micelles peuvent être de différentes morphologies telles que des micelles sphériques ou des micelles anisotropes (par exemple des lamelles ou des vermicelles). Les micelles sphériques sont les plus courantes car les plus accessibles.

Ces micelles sont à l'équilibre, ce qui signifie qu'une dilution ou l'ajout d'un solvant ou d'un cotensio-actif au milieu contenant ces micelles conduisent à une variation de la taille des micelles ou de leur morphologie.

Un but de la présente invention est de proposer des polymères à blocs amphiphiles de structure hydrophobe/hydrophile pouvant former un gel lorsqu'ils sont dans l'eau.

Un autre but est de pouvoir obtenir des gels aqueux, faciles à préparer et dont le module élastique peut être régler.

Pour atteindre les buts ci-dessus, il est décrit infra un copolymère à blocs comprenant au moins un bloc de nature hydrosoluble et au moins bloc de nature majoritairement hydrophobe, qui se présente sous forme de micelles lorsqu'il est dans l'eau.

Ce copolymère à blocs forme un gel viscoélastique lorsqu'il est en solution dans l'eau.

Ce copolymères à blocs compranant au moins un bloc de nature majoritairement hydrophobe et au moins un bloc soluble, le bloc majoritairement hydrophobe présentant des motifs hydrophiles de préférence dans une quantité inférieure à 49 % en poids. Cette quantité peut être égale à 0 mais est de préférence d'au moins 1 % en poids et inférieure a 25% en poids, encore plus préférentiellement comprise entre 2 et 15 %, par rapport aux motifs hydrophobes.

Ce copolymère à blocs comprend au moins un bloc de nature majoritairement hydrophobe et au moins un bloc hydrosoluble, le bloc hydrosoluble présentant des motifs hydrophobes dans une quantité qui peut être faible, de l'ordre de 1%. Le maximum de motifs hydrophobes dépend de la nature des motifs et est dans la plupart des cas inférieure à 70 % en poids et d'au moins 1 % en poids, et de façon encore plus préférée inférieure à 50% en poids et d'au moins 10 %, par rapport aux motifs hydrophiles.

Il est notamment décrit un procédé dé préparation de ces copolymères à blocs par polymérisation dite vivante ou contrôlée.

Il est également décrit un procédé de contrôle de la balance hydrophile/hydrophobe de copolymères à blocs amphiphiles présentant au moins un bloc issu de la polymérisation de monomères hydrophiles et au moins un bloc issu de la polymérisation de monomères hydrophobes, dans lequel on introduit :
- des motifs hydrophiles dans le bloc issu de la polymérisation de monomères hydrophobes, et/ou
- des motifs hydrophobes dans le bloc issu de la polymérisation de monomères hydrophiles.

Enfin, Il est décrit l'utilisation de ces copolymères à blocs en tant Qu'agents gélifiants, ou en tant qu'agents épaississants.

L'invention concerne une solution aqueuse caractérisée en ce qu'elle comprend un copolymère à blocs comprenant au moins un bloc de nature hydrosoluble comprenant des motifs hydrophobes et au moins un bloc de nature majoritairement hydrophobe, le copolymère étant à une concentration d'au moins 0,1% en poids, et en ce que la structure hydrophobe/hydrophile du copolymère est telle que la solution forme un gel viscoelastique. Il est décrit un copolymère à blocs comprenant au moins un bloc de nature hydrosoluble et au moins un bloc de nature majoritairement hydrophobe. Selon un premier mode de réalisation, le copolymère comporte un seul bloc hydrophobe et un seul bloc hydrosoluble. Selon un autre mode de réalisation le copolymère comporte un bloc hydrosoluble ayant à chaque extrémité un groupe hydrophobe.

Dans la description qui suit, on entend par bloc de nature hydrosoluble, un bloc polymère contenant suffisamment de motifs hydrophiles pour que le bloc hydrosoluble soit bien soluble dans l'eau. Par solubilité dans l'eau du bloc hydrosoluble, on entend selon l'invention un copolymère a bloc comportant un tel bloc hydrosoluble et qui, en mélange avec de l'eau, forme un système monophasé translucide. Dans la plupart des cas, pour avoir un tel système monophasé translucide, le bloc hydrosoluble comprend généralement au moins 30 %, de préférence au moins 50 % en poids de motifs hydrophiles par rapport à la totalité des motifs. Par motif, on entend la partie du bloc correspondant à une unité monomère.

De même, par bloc de nature majoritairement hydrophobe, on entend un bloc polymère de préférence au moins 51 % en poids de motifs hydrophobes par rapport à la totalité des motifs. Le bloc de nature majoritairement hydrophobe n'est pas soluble dans l'eau. Ce copolymère à blocs, comprenant au moins un bloc de nature hydrosoluble et au moins un bloc de nature majoritairement hydrophobe, forme un gel viscoélastique lorsqu'il est en solution dans l'eau.

Par gel viscoélastique, on entend un milieu liquide pour lequel le module visqueux G" et le module élastique G' sont tels que G' > G". Ce comportement de gel se traduit par un seuil d'écoulement et même, dans certains cas, par un effet rhéoépaississant (augmentation de la viscosité avec l'écoulement). Cet effet de gel est obtenu lorsque la concentration en polymère dépasse un certain seuil dit concentration critique de gélification.

Les copolymères à blocs présentent l'avantage de rendre les milieux aqueux viscoélastiques alors qu'ils ne sont utilisés qu'en faible quantité par rapport au milieu aqueux. On utilise de préférence le copolymère a une concentration supérieure à 0,1 % en poids, de façon encore plus préférée, de 1 a 10 % en poids.

Les propriétés des copolymères décrits peuvent être obtenues par le choix de la nature des blocs solubles et de la nature des blocs majoritairement hydrophobes, au moins le bloc hydrophile devant comprendre des groupes hydrophobes selon une quantité appropriée.

Selon mode de réalisation de l'invention, le rapport en poids du bloc de nature hydrosoluble sur le bloc totalement hydrophobe est compris entre 95/5 et 20/80, encore plus préférentiellement compris entre 90/10 et 40/80.

Selon une première variante de préparation, les blocs de nature hydrosoluble et les blocs de nature majoritairement hydrophobe des copolymères précédents peuvent être issus de la copolymérisation de monomères hydrophiles et hydrophobes. Les quantités de motifs hydrophiles et hydrophobes dans chacun desdits blocs sont alors contrôlées par les teneurs respectives en monomères hydrophiles et en monomères hydrophobes tors de la polymérisation des blocs.

Ainsi, les blocs de nature majoritairement hydrophobe peuvent être issus de la copolymérisation de monomères hydrophobes et de monomères hydrophiles, les monomères hydrophiles étant présents dans une quantité Inférieure à 49% en poids, de préférence d'au moins 1 % en poids, encore plus préférentiellement comprise entre 2 et 15 %, par rapport aux monomères hydrophobes.

Et les blocs de nature hydrosoluble peuvent être issus de la copolymérisation de monomères hydrophiles et de monomères hydrophobes, les monomères hydrophobes étant présents dans une quantité inférieure à 70 % en poids, de préférence d'au moins 1 % en poids, encore plus préférentiellement comprise entre 50 et 10 %, par rapport aux monomères hydrophiles.

Selon une deuxième variante de préparation, les blocs de nature hydrosoluble peuvent être issus :
- de la polymérisation de monomères pouvant être rendus hydrophiles par hydrolyse et éventuellement de monomères hydrophobes non hydrolysables et/ou de monomères hydrophiles,
- puis, de l'hydrolyse du polymère obtenu.

Au cours de l'hydrolyse, les motifs correspondant aux monomères hydrolysables sont hydrolysés en motifs hydrophiles.

Les quantités de motifs hydrophiles et hydrophobes dans chacun desdits blocs sont alors contrôlées par la quantité de chaque type de monomères et par le taux d'hydrolyse.

Selon cette deuxième variante, diverses mises en oeuvre peuvent être envisagées.

Selon une première mise en oeuvre, les blocs peuvent être obtenus par :
- homopolymérisation de monomères hydrophobes pouvant être rendus hydrophiles par hydrolyse, et
- hydrolyse partielle de l'homopolymère obtenu à un taux tel que l'on obtienne :
   - soit, dans le cas des blocs de nature majoritairement hydrophobe, une quantité de motifs hydrophiles inférieure à 49 % en poids, de préférence d'au moins 1 % en poids, encore plus préférentiellement comprise entre 2 et 15 %, par rapport aux motifs hydrophobes,
   - soit, dans le cas des blocs de nature hydrosoluble, une quantité de motifs hydrophobes inférieure à 30 % en poids, de préférence d'au moins 1 % en poids, encore plus préférentiellement comprise entre 10 et 50 %, par rapport aux motifs hydrophiles.

Selon une deuxième mise en oeuvre, les blocs peuvent être obtenus par :
- copolymérisation de monomères hydrophobes pouvant être rendus hydrophiles par hydrolyse et de monomères hydrophobes ne pouvant pas être rendus hydrophiles par hydrolyse, puis
- hydrolyse totale ou partielle du polymère obtenu.

Selon cette deuxième mise en oeuvre, la quantité de motifs hydrophiles et hydrophobes peut dépendre de deux critères : les teneurs des différents types de monomères et le taux d'hydrolyse.

Si l'hydrolyse est totale, il suffit de jouer sur la teneur en monomères, ainsi :
- les blocs de nature majoritairement hydrophobe peuvent être issus :
   - de la polymérisation d'un mélange de monomères hydrophobes pouvant être rendus hydrophiles par hydrolyse et de monomères hydrophobes ne pouvant pas être rendus hydrophiles par hydrolyse, les monomères hydrophobes pouvant être rendus hydrophiles par hydrolyse étant présents dans une quantité inférieure à 49 % en poids, de préférence d'au moins 1 % en poids, encore plus préférentiellement comprise entre 2 et 15 %, par rapport aux monomères hydrophobes ne pouvant être rendus hydrophiles par hydrolyse,
   - puis, de l'hydrolyse totale du polymère obtenu.
- les blocs de nature hydrosoluble peuvent être issus :
   - de la polymérisation d'un mélange de monomères hydrophobes pouvant être rendus hydrophiles par hydrolyse et de monomères hydrophobes ne pouvant pas être rendus hydrophiles par hydrolyse, les monomères hydrophobes ne pouvant pas être rendus hydrophiles par hydrolyse étant présents dans une quantité inférieure à 50 % en poids, de préférence d'au moins 1 % en poids, encore plus préférentiellement comprise entre 49 et 10 %, par rapport aux monomères hydrophobes pouvant être rendus hydrophiles par hydrolyse,
   - puis de l'hydrolyse totale du polymère obtenu.

Si l'hydrolyse est partielle, on peut jouer à la fois sur la teneur en monomères et le taux d'hydrolyse.

Selon une troisième mise en oeuvre, les blocs peuvent être obtenus par :
- copolymérisation de monomères hydrophobes pouvant être rendus hydrophiles par hydrolyse et de monomères hydrophiles, puis
- hydrolyse partielle du polymère obtenu à un taux tel que l'on obtienne :
   - soit, dans le cas des blocs de nature majoritairement hydrophobe, une quantité de motifs hydrophiles inférieure à 49 % en poids, de préférence d'au moins 1 % en poids, encore plus préférentiellement comprise entre 2 et 15 %, par rapport aux motifs hydrophobes,
   - soit, dans le cas des blocs de nature hydrosoluble, une quantité de motifs hydrophobes inférieure à 70 % en poids, de préférence d'au moins 1 % en poids, encore plus préférentiellement comprise entre 50 et 10 %, par rapport aux motifs hydrophiles.

En général, les monomères hydrophobes peuvent être choisis parmi :
- les monomères vinylaromatiques tel que le styrène,
- les diéniques tels que le butadiène,
- les acrylates et méthacrylates d'alkyle dont le groupe alkyle contient de 1 à 10 atomes de carbone tels que les acrylates et méthacrylates de méthyle, éthyle, n-butyle, 2-éthylhexyle, t-butyle, isobomyle, phényle, benzyle.

De préférence, il s'agit du styrène.

Les monomères hydrophiles peuvent être choisis parmi :
- les acides carboxyliques à insaturation éthylénique tels que les acides acrylique et méthacrylique,
- les monomères hydrophiles neutres tels que l'acrylamide et ses dérivés (n-méthylacrylamide, n-isopropylacrylamide), le méthacrylamide, le méthacrylate et l'acrylate de polyéthylène glycol,
- les monomères hydrophiles anioniques : le 2-acrylamido-2-méthyl-propane sulfonate de sodium (AMPS), le styrène sulfonate de sodium, le vinylsulfonate de sodium.

Les monomères pouvant être rendus hydrophiles par hydrolyse peuvent être choisis parmi :
- les esters acryliques et méthacryliques hydrolysables en acide tels que l'acrylate de méthyle, l'acrylate d'éthyle, l'hydroxyéthyle méthacrylate, l'hydroxyéthyle acrylate, le tertiobutyle acrylate,
- l'acétate de vinyle hydrolysable en unités alcool vinylique,
- le méthacrylate et l'acrylate de 2-dimethylaminoéthyte quatemisé (madamquat et adamquat),
- l'acrylamide et le (méth)acrylamide.

De préférence, les copolymères à blocs sont des copolymères diblocs. Toutefois, il peut également s'agir de copolymères triblocs, voire multiblocs. Si le copolymère comprend trois blocs, il est préférable d'avoir un bloc de nature hydrosoluble encadré par deux blocs de nature majoritairement hydrophobes.

Selon un mode particulier de réalisation de l'invention, le copolymère est un copolymère dibloc comprenant un bloc de nature hydrosolube et un bloc de nature majoritairement hydrophobe, dans lequel :
- le bloc de nature hydrosoluble comprend des motifs acide acrylique (AA) et des motifs acrylate d'éthyle (AEt).
- et le bloc de nature majoritairement hydrophobe comprend des motifs de styrène (St) et d'acide méthacrylique (AMA) et/ou d'hydroxyéthyl méthacrylate (HEMA).

De préférence, selon ce mode, le bloc de nature hydrosoluble est issu :
- de la polymérisation d'acide méthacrylique (AMA) et d'acrylate d'éthyle (AEth) dans un rapport en poids AEt/AMA compris entre 90/10 et 99/1,
- puis de l'hydrolyse du polymère obtenu à un taux d'au moins 50 % et d'au plus 95 % en mole.

De préférence, le bloc de nature majoritairement hydrophobe est, lui, issu de la polymérisation d'un mélange de monomères comprenant au moins 80 % en poids de styrène.

Généralement, les polymères à blocs décrits présentent une masse moléculaire d'au plus 100 000 g/mol, de préférence d'au moins 1000 g/mol.

D'une manière générale, les copolymères à blocs précédents peuvent être obtenus par tout procédé de polymérisation dite vivante ou contrôlée tel que, par exemple :
- la polymérisation radicalaire contrôlée par les xanthates selon renseignement de la demande WO 98/58974,
- la polymérisation radicalaire contrôlée par les dithioesters selon renseignement de la demande WO 97/01478
- la polymérisation à l'aide de précurseurs nitroxydes selon l'enseignement de la demande WO 99/03894,
- la polymérisation radicalaire contrôlée par les dithiocarbamates selon renseignement de la demande WO 39/31144,
- la polymérisation radicalaire par transfert d'atome (ATRP) selon renseignement de la demande WO 96/36421,
- la polymérisation radicalaire contrôlée par les iniferters selon renseignement de Otu et al., Makromol. Chem. Rapid. Commun., 3, 127 (1982).
- la polymérisation radicalaire contrôlée par transfert dégénératif d'iode selon renseignement de Tatemoto et al., Jap. 50, 127, 991 (1975). Daikin Kogyro Co ltd Japan et Matyjaszewski et al., Macromolecules, 28, 2093 (1995)).
- la polymérisation par transfert de groupe selon renseignement de Webster O.W. "Group Transfer Polymerization", p. 580-588 de l'"Encyclopedia of Polymer Science and Engineering", vol.7 et H.F. Mark, N.M. Bikales, C.G. Overberger and G. Menges, Eds., Wiley interscience, New York, 1987,
- la polymérisation radicalaire contrôlée par les dérivés du tetraphényléthane (D. Braun et al. Macromol.Symp. 111,63 (1996)),
- la polymérisation radicalaire contrôlée par les complexes organocobalt (Wayland et al. J.Am.Chem.Soc. 116,7973 (1994)).

La polymérisation préférée est la polymérisation radicalaire vivante à l'aide de xanthates.

Il est en outre décrit un procédé de préparation de ces polymères à blocs. Ce procédé consiste à :
1• mettre en contact :
   - au moins un monomère éthyléniquement insaturé,
   - au moins une source de radicaux libres, et
   - au moins un composé de formule (I) : 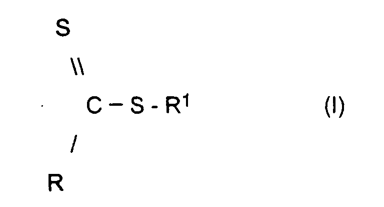
   dans laquelle :
   **R** représente un groupe R²O-, R²R'²N- ou R³- avec :
      **R²** et R'², identiques ou différents, représentant un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
      **R³** représentant H, Cl, un groupe alkyle, aryle, alcène ou alcyne, un (hétéro)cycle saturé ou non, éventuellement substitués, un groupe alkylthio, alkoxycarbonyle, aryloxycarbonyle, carboxy, acyloxy, carbamoyles, cyano, dialkyl- ou diaryl-phosphonato, dialkyl- ou diaryl-phosphinato, une chaîne polymère,
   . **R¹** représente un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, ou une chaîne polymère,
2• répéter au moins une fois la mise en contact précédente en utilisant :
   - des monomères différents de la mise en oeuvre précédente, et
   - à la place du composé précurseur de formule (I), le polymère issu de la mise en oeuvre précédente,
3• éventuellement, hydrolyser le copolymère obtenu.

Les groupes R¹, R², R'² et R³ peuvent être substitués par des groupes alkyles, phényles substitués, des groupes aromatiques substitués ou des groupes 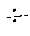 oxo, alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, isocyanate, phtalimido, maleïmido, succinimido, amidino, guanidimo, hydroxy (-OH), amino (-NR₂), halogène, allyle, époxy, alkoxy (-OR), S-alkyle, S-aryle, silyle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R représentant un groupe alkyle ou aryle.

De préférence, le composé de formule (I) est un dithiocarbamate choisi parmi les composés de formules (IA), (IB) et (IC) suivantes : 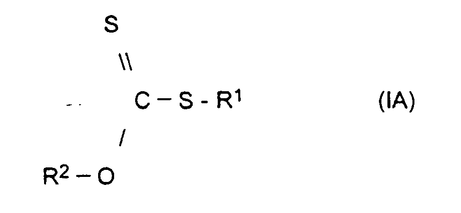 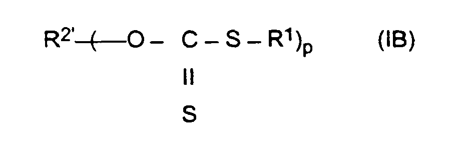 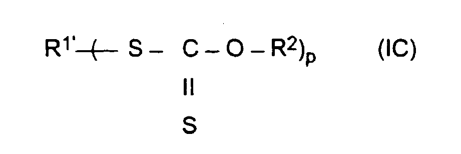 dans lesquelles :
**R²** et **R²'** représentent un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
. **R¹** et **R¹'** représentent un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, une chaîne polymère,
**p** est compris entre 2 et 10.

Au cours de l'étape 1, un premier bloc du polymère est synthétisé de nature hydrosoluble ou hydrophobe selon la nature et la quantité des monomères utilisés. Au cours de l'étape 2, l'autre bloc du polymère est synthétisé.

Les monomères éthyléniquement insaturés seront choisis parmi les monomères hydrophiles, hydrophobes et hydrolysables précédemment définis dans les proportions adaptées pour obtenir un copolymère à blocs dont les blocs présentent les caractéristiques de l'invention. Selon ce procédé, si toutes les polymérisations successives sont réalisées dans le même réacteur, il est généralement préférable que tous les monomères utilisés lors d'une étape aient été consommés avant que la polymérisation de l'étape suivante ne commence, donc avant que les nouveaux monomères ne soient introduits. Toutefois, il peut arriver que les monomères hydrophobes ou hydrophiles de l'étape précédente soient encore présents dans le réacteur lors de la polymérisation du bloc suivant. Dans ce cas, ces monomères ne représentent généralement pas plus de 5 % en mole de tous les monomères et ils participent à la polymérisation suivante en contribuant à introduire des motifs hydrophobes ou hydrophiles dans le bloc suivant.

Pour plus de détails quant au procédé de polymérisation précédents, on peut se reporter au contenu de la demande WO 98/58974.

L'hydrolyse peut être réalisée à l'aide d'une base ou d'un acide. La base peut être choisie parmi tes hydroxydes de métaux alcalins ou alcalino-terreux, tels que la soude ou la potasse, les alcoolates de métaux alcalins tels que le méthylate de sodium, l'éthylate de sodium, le méthylate de potassium, l'éthylate de potassium, le t-butylate de potassium, l'ammoniac et les amines telles que les triéthylamines. Les acides peuvent être choisis parmi l'acide sulfurique, l'acide chlorhydrique, l'acide paratoluénesulfonique. On peut également utiliser une résine échangeuse d'ions ou une membrane échangeuse d'ions de type cationique ou anionique. L'hydrolyse est généralement réalisée à une température comprise entre 5 et 100°C, de préférence entre 15 et 90°C.

Après hydrolyse, le copolymère à blocs peut être lavé, par exemple par dialyse contre de l'eau ou à l'aide de solvant comme l'alcool. Il peut également être précipité en abaissant le pH en dessous de 4,5.

L'hydrolyse peut être réalisée sur un polymère monobloc, qui sera ensuite associé à d'autres blocs, ou sur le polymère à blocs final.

Il est également décrit un procédé de contrôle de la balance hydrophile/hydrophobe de copolymères à blocs amphiphiles présentant au moins un bloc issu de la polymérisation de monomères hydrophiles et au moins un bloc issu de la polymérisation de monomères hydrophobes, dans lequel on introduit :
- des motifs hydrophiles dans le bloc issu de la polymérisation de monomères hydrophobes, et/ou
- des motifs hydrophiles dans le bloc issu de la polymérisation de monomères hydrophile

Enfin, Il est décrit l'utilisation des copolymères à blocs précédents en tant que gélifiant des milieux aqueux et organique. De préférence, les polymères doivent être utilisés selon une concentration d'au moins 0,1 % en poids et d'au plus 20 % en poids. Les copolymères à blocs selon l'invention présentent donc l'avantage de permettre la gélification des milieux liquides en étant utilisés en très faible concentration. Par conséquent, leur coût d'utitisation est plus faible et ils ne perturbent pas ou peu les propriétés du milieu gélifié.

Il est enfin décrit l'utilisation des copolymères à blocs précédents en tant qu'agent épaississant.

Les exemples suivants illustrent l'invention sans toutefois en limiter la portée.

### EXEMPLES :

Dans les exemples qui suivent :
   - Mₙ représente la masse moléculaire moyenne en nombre des polymères, Mₙ est exprimée en équivalents polystyrène (g/mol),
   - M_{w} représente la masse moléculaire moyenne en poids,
   - M_{w}/Mₙ représente l'indice de polydispersité,
   - les polymères, avant hydrolyse, peuvent analysés en GPC avec le THF comme solvant d'élution.

### A - SYNTHESE DES POLYMERES A BLOCS (exemples 1 à 7)

Pour tous les exemples qui suivent, les polymérisations sont menées à un taux de conversion des monomères supérieurs à 95 %.

### Exemple 1 - Synthèse et hydrolyse d'un copolymère dibloc poly(styrène/acide méthacrylique/méthacrylate de 2-hydroxyéthyle)-b-poly(acrylate d'èthyle/acide méthacrylique).

### 1.1. Synthèse d'un copolymère statistique de styrène, d'acide méthacrylique et de méthacrylate de 2-hydroxyéthyle. Rapports massiques : St/AMA/HEMA = 90/5/5.

La polymérisation est réalisée en émulsion, dans un réacteur double enveloppe muni d'une agitation tri-pâle en inox. En pied de cuve, on introduit, à température ambiante, 1178 g d'eau et 25,36 g de sulfate de dodécyle (Texapon K12/96). Le - mélange obtenu est agité pendant 30 minutes (175 tr/min) sous azote. La température est ensuite élevée à 85°C, puis on incorpore 1,55 g de persulfate d'ammonium (NH₄)₂S₂O₈ dans 2,48 g d'eau.

Simultanément, on commence l'addition d'un mélange comprenant :
- 248 g de styrène (St),
- 13,95 g d'acide méthacrylique (AMA),
- 13,95 g de méthacrylate de 2-hydroxyéthyle (HEMA), et
- 7,44 g de a-(o-éthylxanthyl)propionate de méthyle (CH₃CHCO₂Me)SCSOEt (composé de formule IA).

L'addition dure 55 minutes. Quinze minutes après le début de l'ajout du mélange comprenant les comonomères et le a-(o-éthylxanthyl)propionate de méthyle, on démarre l'ajout de 0,56 g de carbonate de sodium Na₂CO₃ dissous dans 100 g d'eau. Ce dernier ajout est fait sur 45 minutes.

Après addition complète des divers ingrédients, on obtient un polymère en émulsion (latex), qui est maintenu à 85°C pendant une heure. Après refroidissement à température ambiante, on prélève 91 g de l'émulsion de polymère pour analyse.

Les résultats d'analyse sont les suivants :
- Mₙ = 5900 g/mol
- M_{w}/Mₙ = 2,2

### 1.2. Synthèse du copolymère dibloc

On part du copolymère en émulsion précédemment obtenu (§1.1.). Pendant une heure, on lui additionne à 85°C :
- 308 g d'acrylate d'éthyle (AEt),
- 16g d'acide méthacrylique (AMA), et
- 0,94 g de Na2CO₃ dilué dans 100 g d'eau.

Le système est maintenu à cette température pendant deux heures supplémentaires. On ajoute ensuite 1,46 g de perbenzoate de t-butyle. Puis, on introduit pendant une heure (jusqu'à la fin de la réaction) : 0,59 g d'acide érythorbique dilué dans 47 g d'eau.

Après refroidissement à température ambiante, on analyse le polymère obtenu. Les résultats d'analyse sont les suivants :
- pH = 4,6
- Mₙ = 13300 g/mol
- M_{w}/Mₙ = 1,75

### 1.3. Hydrolyse du copolymère dibloc

L'hydrolyse est effectuée dans le réacteur de synthèse de l'émulsion de copolymère à blocs. On y introduit :
- 200 g du copolymère précédent (§1.2.), exprimé en sec (650 g à 30,8 %),
- 1900 g d'eau (pour ajuster l'extrait sec à 10 % en poids en fin d'hydrolyse).

Le pH est ensuite ajusté à une valeur de 8 avec de la soude 1N. La température est portée à 90°C. La réaction est effectuée sous azote.

Sous une agitation vigoureuse (160 tr/mn), on ajoute 528 g de soude 2N (correspondant à un équivalent molaire de soude par rapport à l'acrylate d'éthyle) pendant 1 heure. Après addition complète de la soude, la réaction est maintenue dans ces conditions pendant 11 heures.

Par RMN du proton, on mesure que le taux d'hydrolyse des motifs acrylate est de 88 % en mole.

Le produit récupéré en fin de réaction est un gel translucide.

### Exemple 2 - Synthèse et hydrolyse d'un copolymère dibloc poly(styrène/acide méthacrylique)-b-poly(acrylate d'éthyle/acide méthacrylique)

### 2.1. Synthèse d'un copolymère statistique de styrène et d'acide méthacrylique - Rapport massique St/AMA = 95/5

On introduit en pied de cuve, à température ambiante, 1112g d'eau et 25,36 g de sulfate de dodécyle (Texapon K12/96). Le mélange obtenu est agité pendant 30 minutes (175 tr/mn) sous azote. La température est ensuite élevée à 85°C, puis on ajoute 1,55 g de persulfate d'ammonium (NH₄)₂S₂O₈ dilué dans 2,48 g d'eau.

Simultanément, on commence l'addition d'un mélange comprenant :
- 248,04 g de styrène (St),
- 13,99 g d'acide méthacrylique (AMA), et
- 7,44 g de a-(o-éthylxanthyl)propionate de méthyle (CH₃CHCO₂Me)SCSOEt.

On poursuit l'addition pendant 55 minutes. Quinze minutes après le début du mélange comprenant les comonomères et le a-(o-éthylxanthyl)propionate de méthyle, on commence l'ajout sur 45 minutes de 0,56 g de carbonate de sodium Na₂CO₃ dissous dans 100 g d'eau. Après addition complète des divers ingrédients, l'émulsion de copolymère obtenue est maintenue à 85°C pendant une heure.

Après refroidissement à température ambiante, on prélève 89 g de l'émulsion de polymère obtenue pour analyse.

Les résultats sont les suivants :
- Mₙ = 6500 g/mol
- M_{w}/Mₙ = 2,3

### 2.2. Synthèse du copolymère dibloc

On part du copolymère en émulsion obtenu précédemment (§2.1.). Pendant une heure, on lui additionne à 85°C :
- 308 g d'acrylate d'éthyle (AEt),
- 16 g d'acide méthacrylique (AMA), et
- 0,94 g de Na₂CO₃ dilué dans 100 g d'eau.

Le système est maintenu à cette température pendant deux heures supplémentaires. On ajoute ensuite 1,46 g ode perbenzoate de t-butyle. Puis, on introduit pendant une heure (jusqu'à la fin de la réaction) : 0,59 g d'acide érythorbique dilué dans 47 g d'eau.

Après refroidissement à température ambiante, on analyse l'émulsion de copolymère dibloc obtenu. Les résultats sont les suivants :
- pH=5,6
- Mₙ = 13900 g/mol
- M_{w}/Mₙ= 1,7

### 2.3. Hydrolyse du copolymère dibloc

Le copolymère dibloc précédent (§2.2.) est hydrolysé.

Le mode opératoire est le même que celui de l'exemple 1 (§1.3.)(un équivalent molaire de NaOH par rapport aux motifs acrylate d'éthyle).

Le taux d'hydrolyse obtenu est de 84 % en mole.

Le produit récupéré en fin de réaction est un gel translucide.

### Exemple 3 - Synthèse et hydrolyse d'un copolymère dibloc poly(styrène/méthacrylate de 2-hydroxyéthyle)-b-poly(acrylate d'éthyle/acide méthacrylique)

### 3.1. Synthèse d'un copolymère statistique de styrène et de méthacrylate de 2-hydroxyéthyle - Rapport massique St/HEMA = 95/5

Le protocole expérimental est identique à celui décrit dans l'exemple 2, §2.1., à la différence près que l'acide méthacrylique est remplacé par une quantité massique égale de méthacrylate de 2-hydroxyéthyle (HEMA). En fin de polymérisation, on obtient un copolymère en émulsion dont 89 g sont prélevés pour analyse.

L'analyse est la suivante :
- Mₙ = 6400 g/mol
- M_{w}/Mₙ = 2,2

### 3.2. Synthèse du copolymère dibloc

On part du copolymère en émulsion obtenu précédemment (§3.1.). Pendant une heure, on lui additionne à 85°C :
- 308 g d'acrylate d'éthyle (AEt),
- 16 g d'acide méthacrylique (AMA), et
- 0,94 g de Na₂CO₃ dilué dans 100 g d'eau.

Le système est maintenu à cette température pendant deux heures supplémentaires. On ajoute ensuite 1,46 g de perbenzoate de t-butyle. Puis, on introduit pendant une heure (jusqu'à la fin de la réaction) : 0,59 g d'acide érythorbique dilué dans 47 g d'eau.

Après refroidissement à température ambiante, on analyse le polymère obtenu. Les résultats sont les suivants :
pH=5,1
   - Mₙ = 13000 g/mol
   - M_{w}/Mₙ = 1,8

### 3.3. Hydrolyse du copolymère dibloc

Le copolymère dibloc précédent (§3.2.) est hydrolysé.

Le mode opératoire est le même que celui de l'exemple 1 (§1.3.)(un équivalent molaire due NaOH par rapport aux motifs AEt).

Le taux d'hydrolyse obtenu est de 90 % en mole.

### Exemple 4 - Synthèse et hydrolyse d'un copolymère dibloc poly(styrène/acide méthacrylique)-b-poly(acrylate d'éthyle/acide méthacrylique)

### 4.1. Synthèse d'un copolymère statistique de styrène et d'acide méthacrylique. Rapport massique St/AMA = 90/10.

En pied de cuve, on introduit, à température ambiante, 1178 g d'eau et 25,36 g de sulfate de dodécyle (Texapon K12/96). Le mélange obtenu est agité pendant 30 minutes (175 tr/min) sous azote. La température est ensuite élevée à 83°C, puis on ajoute un mélange 1 comprenant :
- 24,8 g de styrène (St),
- 2,72 g d'acide méthacrylique (AMA), et
- 7,42 g de xanthate (CH₃CHCO₂Me)SCSOEt.

Le mélange est porté à 85°C, puis on introduit 1,55 g de persulfate d'ammonium (NH₄)₂S₂O₈ dilué dans 2,48 g d'eau

Simultanément, on démarre l'addition d'un mélange 2 comprenant :
- 223,24 g de styrène (St) et
- 24,88 g d'acide méthacrylique (AMA).

On poursuit l'addition pendant 55 minutes. Quinze minutes après l'ajout du mélange 2 de comonomères, on commence l'ajout sur 45 minutes de 0,56 g de carbonate de sodium Na₂CO₃ dissous dans 100 g d'eau. Après addition complète des divers ingrédients, l'émulsion de copolymère obtenue est maintenue à 85°C pendant une heure.

Après refroidissement à l'ambiante, on prélève 91 g de l'émulsion pour analyse. Les résultats d'analyse sont les suivants :
- Mₙ = 6300 g/mol
- M_{w}/Mₙ = 2,1

### 4.2. Synthèse du copolymère dibloc

On part du copolymère en émulsion obtenu précédemment (§4.1.). Pendant une heure, on lui additionne à 85°C :
- 308 g d'acrylate d'éthyle (AEt),
- 16 g d'acide méthacrylique (AMA), et
- 0,94 g de Na₂CO₃ dilué dans 100 g d'eau.

Le système est maintenu à cette température pendant deux heures supplémentaires. On ajoute ensuite 1,46 g de perbenzoate de t-butyle. Puis, on introduit pendant une heure (jusqu'à la fin de la réaction) : 0,59 g d'acide érythorbique dilué dans 47 g d'eau.

Après refroidissement à température ambiante, on analyse le polymère obtenu. Les résultats sont les suivants :
- Mₙ = 13700 g/mol
- M_{w}/Mₙ = 1,8

### 4.3. Hydrolyse du copolymère dibloc

Le mode opératoire est le même que celui de l'exemple 1 (§4.3.)(un équivalent molaire de NaOH par rapport aux motifs AEt).

Le taux d'hydrolyse obtenu est de 90 % en mole.

Le produit récupéré en fin de réaction est un gel translucide.

### Exemple 5 - Synthèse et hydrolyse d'un copolymère dibloc poly(styrène/acide méthacrylique/méthacrylate de 2-hydroxyéthyle)-b-poly(acrylate d'éthyle/acide méthacrylique)

Ce copolymère dibloc est synthétisé de la même manière que dans l'exemple 4.

Le copolymère statistique de styrène, d'acide méthacrylique et de méthacrylate de 2-hydroxyéthyle obtenu présente les caractéristiques suivantes :
- rapports massiques : St/AMA/HEMA = 80/10/10.
- Mₙ = 6900 g/mol,
- M_{w}/Mₙ = 2,3.

A partir de ce copolymère, on synthétise un polymère dibloc par polymérisation d'un mélange acrylate d'éthyle/acide méthacrylique de rapport massique AEt/AMA = 95/5.

Le copolymère dibloc présente les caractéristiques suivantes :
- pH = 5,1,
- Mₙ = 13800 g/mol,
- M_{w}/Mₙ = 1,7.

Le copolymère dibloc est partiellement hydrolysé à un taux de 83 % en mole.

### Exemple 6 - Synthèse et hydrolyse d'un copolymère dibloc poly(styrène/acrylate d'héthyle)-b-poly(acrylate d'éthyle/acide méthacrylique)

Ce copolymère dibloc est synthétisé de la même manière que dans l'exemple 4.

Le copolymère statistique de styrène et d'acrylate d'éthyle obtenu présente les caractéristiques suivantes :
- rapports massiques : St/AEth = 80/20,
- Mₙ = 7400 g/mol
- M_{w}/Mₙ = 2,2.

A partir de ce copolymère, on synthétise un polymère dibloc par polymérisation d'un mélange acrylate d'éthyte/acide méthacrylique de rapport massique AEt/AMA = - 95/5.

Le copolymère dibloc présente les caractéristiques suivantes :
- pH = 5,1,
- Mₙ = 14200 g/mol,
- M_{w}/Mₙ = 1,9.

Le copolymère dibloc est partiellement hydrolysé à un taux de 90 % en mole.

### Exemple 7 Synthèse et hydrolyse d'un copolymère dibloc styrène-b-poly(acrylate d'éthyle/acide méthacrylique)

Ce copolymère dibloc est synthétisé de la même manière que dans l'exemple 4.

Le polymère de styrène obtenu présente les caractéristiques suivantes :
- Mₙ = 2600 g/mol,
- M_{w}/Mₙ = 2,4.

A partir de ce polymère, on synthétise un polymère dibloc par polymérisation d'un mélange acrylate d'éthyle/acide méthacrylique de rapport massique AEt/AMA = 95/5.

Le copolymère dibloc présente les caractéristiques suivantes :
- pH = 5,1,
- Mₙ = 17700 g/mol,
- M_{w}/Mₙ = 2,7.

Le copolymère dibloc est partiellement hydrolysé à un taux de 87 % en mole.

### B - PROPRIETES DES POLYMERES A BLOCS des exemples 1 à 7)

### Exemple 8 - Copolymères diblocs comprenant un bloc majoritairement hydrophobe et un bloc hydrosoluble

Les copolymères à blocs hydrolysés des exemples 1 à 6 présentent :
- un bloc hydrosoluble, et
- un bloc majoritairement hydrophobe.

Après hydrolyse, ces polymères sont lavés par dialyse contre de l'eau. Selon le test d'analyse auquel ils sont soumis, ils peuvent ensuite:
- être concentrés par liophylisation puis remise en dispersion, ou
- être dilués dans l'eau millipore pour les ammener à la concentration souhaitée.

Le pH est ajusté à 9.

### Contrôle de la présence d'un gel viscoélastique

Tous ces copolymères à blocs forment dans l'eau un gel translucide à faible concentration. La concentration critique en poids pour laquelle ils forment un gel en solution, appelée "concentration critique de gélification" est donnée dans le tableau 1. Cette concentration est celle pour laquelle le module élastique G' devient supérieur au module visqueux (G"). Les mesures sont rassemblées dans le tableau 1.

**Tableau 1**

| Exemple | concentration critique de gélification |
|---|---|
| 1 | 4 % en poids |
| 2 | 4 % en poids |
| 3 | 5 % en poids |
| 4 | 2 % en poids |
| 5 | 3 % en poids |
| 6 | 4 % en poids |

Pour les exemples 2, 4 et 5, les valeurs du module élastique (G') et du module visqueux (G") ont été mesurées à l'aide d'un rhéomètre Rhéométrixe ARES dans les conditions suivantes :
- fréquences comprises entre 10⁻² et 10² rad/s,
- déformation de 20 %,
- concentration de 5 % en poids (extrait sec) en polymère.

Les mesures sont rassemblées dans le tableau 2.

**Tableau 2**

| Exemple | G' (Pa) | G" (Pa) |
|---|---|---|
| 2 | 60 | 10 |
| 4 | 400 | 20 |
| 5 | 100 | 10 |

On constate que le module élastique est toujours supérieur au module visqueux. Le gel le plus fort est celui de l'exemple 4 (plus fort module élastique) qui présente également la concentration critique de gélification la plus faible.

### Contrôle de la présence de micelles

Les copolymères à blocs des exemples 1 à 5 sont mis en solution dans l'eau à une concentration de 10⁻² %.
- La dimension du coeur hydrophobe à base de polystyrène des micelles est déterminée par diffusion de neutrons aux petits angles, après dilution des polymères dans l'eau lourde (D₂O), à 10⁻² %, et en appliquant aux spectres de diffusion les traitements classiques connus.

On détermine ainsi pour les exemples ci-dessous que le coeur hydrophobe en polystyrène des micelles est essentiellement sphérique. Dans le tableau 3, on indique les rayons déduits des traitements dits de "Guinier' et de "Porod".

Le nombre d'agrégation qui correspond au nombre de diblocs participant à une micelle est calculé à partir du volume du coeur hydrophobe des micelles. Il est reporté dans le tableau 3 suivant calculé à partir de la valeur du rayon de "Guinier".

**Tableau 3**

| Exemple | Rayon de "Guinier" | Rayon de "Porod" | Nombre d'agrégation |
|---|---|---|---|
| 2 | 10 nm | 14 nm | 190 |
| 4 | 8 nm | 11 nm | 100 |
| 5 | 6,5 nm | 9 nm | 50 |

- La valeur du rayon du coeur hydrophobe et la forme sphérique sont confirmés pour les exemples 2 et 4 par cryo-microscopie (microscopie électronique à transmission faite sur un échantillon gelé). On observe des petites particules sphériques de 15 a 20 nm de diamètre attribuées au coeur de polystyrène.

### Contrôle de la présence de micelles associées

• Ces solutions 1, 2, 4 et 5 sont analysées par diffusion quasiélastique de la lumière à l'aide d'un banc de diffusion Brookhaven (goniomètre BI-200SM et corrélateur BI-900AT) à un angle de 90° et en appliquant le traitement de l'appareil dit "Contin". Par mesure du spectre d'autocorrélation, on déduit un coefficient de diffusion "lent" associé à l'existence de gros objets de plusieurs centaines de nm. La dimension des objets pour une concentration de 10⁻² % est donnée dans le tableau 4.

**Tableau 4**

| Exemple | Dimension des objets |
|---|---|
| 1 | 185 nm |
| 2 | 175 nm |
| 4 | 320 nm |
| 5 | 100 nm |

La taille maximale théorique d'un dibloc en solution de masse 15000 étant inférieure à 100 nm, ces gros objets résultent donc de l'association des dibloc entre eux sous forme de micelles ou de l'association de micelles entre elles, probablement par association des motifs hydrophobes des blocs hydrosolubles.

### Exemple 9 - Polymères diblocs comprenant un bloc totalement hydrophobe et un bloc hydrosoluble

### Copolymère selon l'exemple 7 :

Ce polymère à blocs en solution dans l'eau forme un gel translucide à faible concentration : la valeur de la concentration critique de gélification est de 3 % en poids.

Ce polymère est analysé en utilisant les techniques de l'exemple 10 :
- par diffusion de neutron, on constate que le coeur hydrophobe sphérique de styrène présente un rayon "Guinier" de 8,6 nm,
- la forme et la taille sont confirmés par un cliché de cryo-microscopie électronique,
- la dimension de l'objet déterminé par diffusion quasiélastique de la lumière est de 337 nm et sa dimension fractale déterminée par diffusion statique de la lumière est de 1.

Nous obtenons donc dans le cas d'un dibloc très disymétrique (17/83) avec un bloc totalement hydrophobe et un bloc partiellement hydrophile le même type de propriété qu'avec un bloc symétrique (50/50) partiellement hydrophile/partiellement hydrophobe (exemple 1 à 6)

### C) SYNTHESE DE COPOLYMERES A BLOCS (EXEMPLES 10 ET 11)

### Exemple 10 - Synthèse et hydrolyse d'un copolymères dibloc poly(styrène/acid méthacryligue)-b-poly(acrylate d'éthyle/acide méthacrylique):

### 10.1. Synthèse d'un copolymère statistique de styrène et d'acide méthacrylique. Rapport massique St/AMA = 98/2. Masse theorique : Mₙ = 2000 g/mol

En pied de cuve, on introduit, à température ambiante, 682.5 g d'eau, 8.54 g de dodecyl sulfate de sodium et 0.189 g de carbonate de sodium Na₂CO₃. Le mélange obtenu est agité pendant 30 minutes (190 tr/min) sous azote. La température est ensuite élevée à 75°C, puis on ajoute un mélange 1 comprenant :
- *5.19* g de styrène (St),
- *0.105* g d'acide méthacrylique (AMA), et
- *5.51* g de xanthate (CH₃CHCO₂Me)SCSOEt.

Le mélange est porté à 85°C, puis on introduit 1,21 g de persulfate d'ammonium (NH₄)₂S₂O₈.

Simultanément, on démarre l'addition d'un mélange 2 comprenant :
- 46.78 g de styrène (St) et
- 0.945 g d'acide méthacrylique (AMA).

On poursuit l'addition pendant 60 minutes. Après addition complète des divers ingrédients, l'émulsion de copolymère obtenue est maintenue à 85°C pendant une heure.

### 10.2. Synthèse du copolymère dibloc. Rapport massique AEt/AMA = 98/2. Masse theorique Mₙ = 21468 g/mol

On part du copolymère en émulsion obtenu précédemment après en avoir prélevé 36 g pour analyse (§10.1.). On introduit 0.576 g de persulfate d'ammonium (NH₄)₂S₂O₈ dilué dans 10 g d'eau.

Pendant une heure, on lui additionne à 85°C :
- 481.9 g d'acrylate d'éthyle (AEt),
- 9.8 g d'acide méthacrylique (AMA), et
- 0,545 g de Na₂CO₃ dilué dans 150 g d'eau.

Le système est maintenu à cette température pendant trois heures supplémentaires.

### 10.3. Hydrolyse du copolymère dibloc

- **Echantillon 10.3.a :** Le copolymere précédent est hydrolyse : On introduit dans le réacteur:
- 30 g du copolymère précédent (§10.2.), exprimé en sec (74.6 g à 40.2 %),
- 157.4 g d'eau (pour ajuster l'extrait sec à 10 % en poids en fin d'hydrolyse).

La température est portée à 90°C. Sous une agitation vigoureuse, on ajoute 67.9ml de soude 2N (correspondant à 0.51 équivalent molaire de soude par rapport à l'acrylate d'éthyle) pendant 1 heure. Après addition complète de la soude, la réaction est maintenue dans ces conditions pendant 24 heures. Le produit récupéré en fin de réaction est un gel translucide. On détermine par RMN un taux d'hydrolyse d'environ 44 % .
- **Echantillon 10.3.b :** Le mode opératoire est le même que celui de l'échantillon 10.2. La quantité de soude ajoutée correspond à 0.66 équivalent molaire de soude par rapport à l'acrylate d'éthyle. Le produit récupéré en fin de réaction est un gel translucide. On détermine par RMN un taux d'hydrolyse d'environ 61 %.
- **Echantillon 10.3.c :** Le mode opératoire est le même que celui de l'échantillon 10.2. La quantité de soude ajoutée correspond à 0.76 équivalent molaire de soude par rapport à l'acrylate d'éthyle. Le produit récupéré en fin de réaction est un gel translucide. On détermine par RMN un taux d'hydrolyse d'environ 72 %.
- **Echantillon 10.3.d :** Le mode opératoire est le même que celui de l'échantillon 10.2. La quantité de soude ajoutée correspond à 0.9 équivalent molaire de soude par rapport à l'acrylate d'éthyle. Le produit récupéré en fin de réaction est un gel translucide. On détermine par RMN un taux d'hydrolyse d'environ 79 %.
- **Echantillon 10.3.e :** Le mode opératoire est le même que celui de l'échantillon 10.2. La quantité de soude ajoutée correspond à 2 équivalents molaires de soude par rapport à l'acrylate d'éthyle. Le produit récupéré en fin de réaction est un gel translucide. On détermine par RMN un taux d'hydrolyse supérieur à environ 95 % et inférieur à environ 98 %.

### Exemple 11 - Synthèse et hydrolyse d'un copolymère tribloc poly(styrène/acide méthacrylique)-b-poly(acrylate d'éthyle/acide méthacrylique)-b-poly(styrène/acide méthacrylique) de masse théorique 2000-19468-500

### 11.1.Synthèse d'un copolymère statistique de styrène et d'acide méthacrylique. Rapport massique St/AMA = 98/2.

Le protocole expérimental est identique à celui décrit dans l'exemple 10, §10.1

### 11.2. Synthèse du copolymère dibloc. Rapport massique AEt/AMA = 98/2. Masse théorique Mₙ = 21468 g/mol

Le protocole expérimental est identique à celui décrit dans l'exemple 10, §10.2

### 11.3. Synthèse du copolymère tribloc. Rapport massique PS/AMA dans le 3eme bloc = 98/2. Masse théorique Mₙ = 21968 g/mol

On part de 968 g du copolymère dibloc obtenu précédemment (§11.2). On introduit 0.032 g de carbonate de sodium de Na₂CO₃ dilué dans 5 g d'eau et 0.2878 g de persulfate d'ammonium (NH₄)₂S₂Og dilué dans 10 g d'eau.

Pendant une heure, on additionne à 85°C :
- 9 g styrène (St),
- 0.173 g d'acide méthacrylique (AMA)

Le système est maintenu à cette température pendant une heure supplémentaire.

### 11.4. Hydrolyse du copolymère tribloc

Le copolymère précédent est hydrolyse selon le protocole décrit pour l'échantillon 10.3.a. La quantité de soude ajoutée correspond à 2 équivalents molaires de soude par rapport à l'acrylate d'éthyle. Le produit récupéré en fin de réaction est un gel translucide. On détermine par RMN un taux d'hydrolyse supérieur à environ 95 % et inférieur à environ 98 %.

### D) PROPRIETES DES POLYMERES A BLOCS DES EXEMPLES 10 ET 11:

### Exemple 12- Copolymères diblocs comprenant un bloc majoritairement hydrophobe et un bloc hydrosoluble. Variation du nombre de motifs hydrophobies dans le bloc hydrosoluble.

Apres hydrolyse, les copolymères 10.3.a, 10.3.b, 10.3.c, 10.3.d sont dilués dans l'eau millipore pour ies amener à la concentration souhaitée. Le polymère 10.3.e est lavé par dialyse contre de l'eau puis dilué dans l'eau millipore pour l' amener à la concentration souhaitée.

Pour les copolymères 10.3.a, 10.3.b, 10.3.c, 10.3.d et 10.3.e, les valeurs du module élastique (G') et du module visqueux (G") ont été mesurées à l'aide d'un rhéomètre Rhéométrix SR200 dans les conditions suivantes :
- fréquences comprises entre 10⁻² et 10² rad/s,
- déformation de 5 ou 10 %,
- concentration de 2 % en poids (extrait sec) en polymère.

Les valeurs obtenues à une fréquence de 1 rad/s sont rassemblées dans le tableau 5.

**Tableau 5**

| Exemple | G' (Pa) | G" (Pa) |
|---|---|---|
| 10.3.a | 11.9 | 4.4 |
| 10.3.b | 16.8 | 5.0 |
| 10.3.c | 9.1 | 4.1 |
| 10.3.d | 1.8 | 1.2 |
| 10.3.e | 0.65 | 0.40 |

Du tableau 5, il apparaît que le module élastique présente un maximum pour un taux d'hydrolyse d'environ 60 %.

### Exemple 13- Copolymère tribloc comprenant un bloc majoritairement hydrophobe. un bloc hydrosoluble et un bloc majoritairement hydrophobe.

Apres hydrolyse, Le polymère de l'exemple 11.4 est lavé par dialyse contre de l'eau puis dilué dans l'eau millipore pour l'amener à la concentration souhaitée.

Les valeurs du module élastique et du module visqueux ont été déterminées selon le même mode opératoire que dans l'exemple 12.

Les valeurs obtenues à une fréquence de 1 rad/s sont rassemblées dans le tableau 6.

**Tableau 6**

| Exemple | G' (Pa) | G" (Pa) |
|---|---|---|
| 11.4 | 30.2 | 3.6 |
| 10.3.e | 0.65 | 0.40 |

Du tableau 6, il apparaît que l'utilisation d'un tribloc permet d'augmenter très sensiblement le module élastique.

## Revendications

1. Solution aqueuse **caractérisée en ce qu'**elle comprend un copolymère à blocs comprenant au moins un bloc de nature hydrosoluble comprenant des motifs hydrophobes et au moins un bloc de nature majoritairement hydrophobe, le copolymère étant à une concentration d'au moins 0,1 % en poids, et **en ce que** la structure hydrophobe/hydrophile du copolymère est telle que la solution forme un gel viscoélastique.

2. Solution selon la revendication 1, **caractérisée en ce que** le bloc majoritairement hydrophobe présente des motifs hydrophiles dans une quantité égale à 0 et inférieure à 25 % en poids, de préférence d'au moins 1 % en poids, encore plus préférentiellement comprise entre 2 et 15 %, par rapport aux motifs hydrophobes.

3. Solution selon la revendication 1 ou 2, **caractérisée en ce que** le bloc de nature hydrosoluble présente des motifs hydrophobes dans une quantité inférieure à 70 % en poids, et d'au moins 10 % en poids, encore plus préférentiellement comprise entre 50 et 10%, par rapport aux motifs hydrophiles.

4. Solution selon la revendication 1, **caractérisée en ce que** le bloc de nature majoritairement hydrophobe est un bloc totalement hydrophobe.

5. Solution selon l'une quelconque des revendications 1 à 3, **caractérisée en ce que** le rapport en masse entre les blocs de nature majoritairement hydrophile et les blocs de nature majoritairement hydrophobe est compris entre 95/5 et 20/80, de préférence entre 90/10 et 40/80.

6. Solution selon l'une quelconque des revendications 1 à 5, **caractérisée en ce que** le copolymère est à une concentration d'au moins 1 % en poids, et d'au plus 20 %, de préférence d'au plus 10%.

7. Solution selon l'une quelconque des revendications 1 à 6, comprenant au moins un bloc de nature hydrosoluble et/ou au moins un bloc de nature majoritairement hydrophobe, **caractérisée en ce qu'**au moins l'un desdits blocs est un copolymère issu de la copolymérisation de monomères hydrophiles et hydrophobes.

8. Solution selon la revendication 7, **caractérisée en ce que** les quantités de motifs hydrophiles et hydrophobes dans chacun desdits blocs sont contrôlées par les teneurs respectives en monomères hydrophiles et en monomères hydrophobes lors de la polymérisation des blocs.

9. Solution selon l'une quelconque des revendications 1 à 8. comprenant au moins un bloc de nature hydrosoluble et/ou au moins un bloc de nature majoritairement hydrophobe **caractérisée en ce qu'**au moins l'un desdits blocs est un copolymère issu :
- de la polymérisation de monomères pouvant être rendus hydrophiles par hydrolyse et éventuellement de monomères hydrophobes non hydrolysables et de monomères hydrophiles,
- puis de l'hydrolyse du polymère obtenu.

10. Solution selon la revendication précédente, **caractérisée en ce que** les quantités de motifs hydrophiles et hydrophobes dans chacun desdits blocs sont contrôlées par la quantité de monomères pouvant être rendus hydrophiles par hydrolyse et par le taux d'hydrolyse.

11. Solution selon l'une quelconque des revendications 1 à 10, **caractérisée en ce que** les monomères hydrophobes sont choisis parmi :
- les monomères vinylaromatiques,
- les dioléfines,
- les acrylates et méthacrylates d'alkyle dont le groupe alkyle contient de 1 à 10 atomes de carbone.

12. Solution selon l'une quelconque des revendications 1 à 11, **caractérisée en ce que** les monomères hydrophiles sont choisis parmi :
- les acides carboxyliques à insaturation éthylénique,
- les monomères hydrophiles neutres tels que l'acyrlamide et ses dérivés (n-méthylacrylamide, n-isopropylacrylamide), le méthacrylamide, le méthacrylate et l'acrylate de polyéthylène glycol,
- les monomères hydrophiles anioniques tels que le 2-acrylamido-2-méthyl-propane sulfonate de sodium (AMPS), le styrène sulfonate de sodium, le vinylsulfonate de sodium.

13. Solution selon rune quelconque des revendications 1 à 12, **caractérisée en ce que** les monomères pouvant être rendus hydrophiles par hydrolyse sont choisis parmi :
- les esters acryliques et méthacryliques hydrolysables en acide tels que l'acrylate de méthyle, l'acrylate d'éthyle, l'hydroxyéthyle acrylate, l'hydroxyéthyle méthacrylate, le tertiobutyle acrylate,
- l'acétate de vinyle hydrolysable en unités alcool vinylique,
- le méthacrylate et l'acrylate de 2-dimethylaminoéthyle quaternisé (madamquat et adamquat),
- l'acrylamide et le (méth)acrylamide.

14. Solution selon l'une quelconque des revendications précédentes, **caractérisée en ce qu'**il s'agit de copolymères diblocs ou de copolymères triblocs présentant un bloc de nature hydrosoluble encadré par deux blocs de nature majoritairement hydrophobes.

15. Solution selon l'une quelconque des revendications 1 à 14, **caractérisée en qu'**il s'agit d'un copolymère dibloc comprenant un bloc de nature hydrosoluble et un bloc de nature majoritairement hydrophobe,
- le bloc de nature hydrosoluble comprenant des motifs acide acrylique (AA) et des motifs acrylate d'éthyle (AEt),
- et le bloc de nature majoritairement hydrophobe comprenant des motifs de styrène (St) et d'acide méthacrylique (AMA) et/ou d'hydroxyéthylméthacrylate (HEA).

16. Solution selon la revendication précédente, **caractérisée en ce que** le bloc de nature hydrosoluble est issu
- de la polymérisation d'acide méthacrylique (AMA) et d'acrylate d'éthyle (AEth) dans un rapport en poids AEt/AMA compris entre 90/10 et 99/1,
- puis de l'hydrolyse du polymère obtenu à un taux d'au moins 50 % et d'au plus 95 % en mole.

17. Solution selon la revendications 15 ou 16, **caractérisée en ce que** le bloc de nature majoritairement hydrophobe est issu de la polymérisation d'un mélange de monomères comprenant au moins 80 % en poids de styrène.

18. Solution selon l'une quelconque des revendications précédentes, **caractérisé en ce qu'**il présente une masse moléculaire d'au plus 100 000 g/mol.

19. Solution selon selon l'une des revendications 1 à 18, **caractérisée en ce** les copolymères à blocs sont obtenus par un procédé dans lequel on met en oeuvre un procédé de polymérisation dit vivant ou contrôlé.

20. Slolution la revendication 19, **caractérisé en ce que** pour le procédé:
1• on met en contact :
- au moins un monomère éthyléniquement insaturé,
- au moins une source de radicaux libres, et
- au moins un composé de formule (I) : 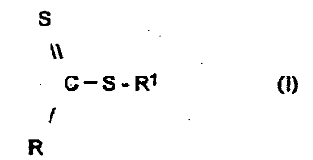
dans laquelle :
. **R** représente un groupe R²O-, R²R'²N- ou R³- où :
**R²** et **R'²** identiques ou différents, représentent un groupe (i) alkyle, acyle, aryle, alcène ou alcyne, ou un cycle (li) carboné, saturé ou non, éventuellement aromatique, ou un hétérocycle (Iii), saturé ou non, ces groupes et cycles (i). (ii) et (lll) pouvant être substitués,
. **R³** représente H, Cl. un groupe alkyle, aryle, alcène ou alcyne, un cycle saturé ou non, un hétérocycle, saturé ou non, un groupe alkylthio, alkoxycarbonyle, aryloxycarbonyle, carboxy, acyloxy, carbamoyles, cyano, dialkyl- ou diaryl-phosphonato, dialkyl- ou diaryl-phosphinato, une chaîne polymère,
. **R¹** représente un groupe (l) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, une chaîne polymère,
2· on répète au moins une fois la mise en contact précédente en utilisant :
- des monomères différents de la mise en oeuvre précédente, et
- à la place du composé précurseur de formule (I), le polymère issu de la mise en oeuvre précédente,
3· éventuellement, on hydrolyse le copolymère obtenu.

21. Solution selon la revendication 20, **caractérisée en ce que** le composé de formule (I) est un dithiocarbamate choisi parmi les composés de formules (IA), (IB) et (IC) suivantes : 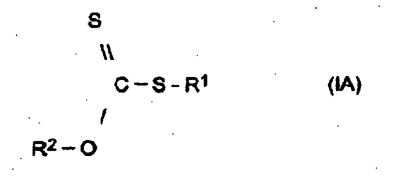 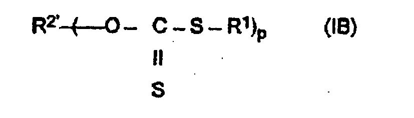 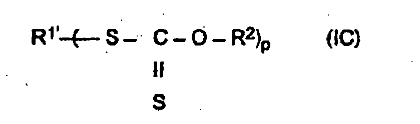 dans desquelles:
. **R²** et **R²'** représentent un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
. **R¹** et **R¹'** représentent un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, une chaîne polymère,
. p est compris entre 2 et 10.

22. Copolymère à blocs comprenant :
- un bloc de nature hydrosoluble comprenant des motifs hydrophobes, et
- un bloc de nature majoritairement hydrophobe,
**caractérisé en ce que**:
- c'est un copolymère dibloc
- en solution dans reau il forme un gel viscoélastique
- le rapport en masse entre le blocs de nature majoritairement hydrophile et le blocs de nature majoritairement hydrophobe est compris entre 90/10 et 40/60.
- le bloc de nature majoritairement hydrophobe comprend des motifs de styrène et d'acide méthacylique,
- le bloc de nature hydrosoluble comprend des motifs acide acrylic et des motifs acrylate d'éthyle.

23. Copolymère selon la revendication 22, **caractérisé en ce que** le bloc de nature hydrosoluble présente des motifs hydrophobes acrylate d'éthyle dans une quantité comprise entre 10% et 70% par rapport aux motifs hydrophiles acide acrylique.

## Claims

1. Aqueous solution, **characterized in that** it comprises a block copolymer comprising at least one block water-soluble in nature and containing hydrophobic units and at least one block predominantly hydrophobic in nature, the copolymer being at a concentration of at least 0.1% by weight, and **in that** the hydrophobic/hydrophilic structure of the copolymer is such that the solution forms a viscoelastic gel.

2. Solution according to Claim 2, **characterized in that** the predominantly hydrophobic block has hydrophilic units in an amount of less than 25% by weight, preferably at least 1% by weight, and even more preferably between 2 and 15%, with respect to the hydrophobic units.

3. Solution according to Claim 1 or 2, **characterized in that** the block water-soluble in nature has hydrophobic units in an amount of less than 70% by weight, and of at least 10% by weight, even more preferably between 50 and 10%, with respect to the hydrophilic units.

4. Solution according to Claim.1, **characterized in that** the block predominantly hydrophobic in nature is a completely hydrophobic block.

5. Solution according to any one of Claims 1 to 3, **characterized in that** the mass ratio of the blocks predominantly hydrophilic in nature to the blocks predominantly hydrophobic in nature is between 95/5 and 20/80, preferably between 90/10 and 40/60.

6. Solution according to any one of Claims 1 to 5, **characterized in that** the copolymer is at a concentration of at least 1% by weight, and of at most 20%, preferably of at most 10%.

7. Solution according to any one of Claims 1 to 6, comprising at least one block water-soluble in nature and/or at least one block predominantly hydrophobic in nature, **characterized in that** at least one of the said blocks is a copolymer coming from the copolymerization of hydrophilic and hydrophobic monomers.

8. Solution according to Claim 7, **characterized in that** the amounts of hydrophilic and hydrophobic units in each of the said blocks are controlled by the respective contents of hydrophilic monomers and of hydrophobic monomers during the polymerization of the blocks.

9. Solution according to any one of Claims 1 to 8, comprising at least one block water-soluble in nature and/or at least one block predominantly hydrophobic in nature, **characterized in that** at least one of the said blocks is a copolymer coming:
- from the polymerization of monomers that may be rendered hydrophilic by hydrolysis, and optionally of non-hydrolysable hydrophobic monomers and of hydrophilic monomers, and then
- from the hydrolysis of the polymer obtained.

10. Solution according to the preceding claim, **characterized in that** the amounts of hydrophilic and hydrophobic units in each of the said blocks are controlled by the amount of monomers that can be rendered hydrophilic by hydrolysis and by the degree of hydrolysis.

11. Solution according to any one of Claims 1 to 10, **characterized in that** the hydrophobic monomers are chosen from:
- vinylaromatic monomers;
- diolefins;
- alkyl acrylates and methacrylates, the alkyl group of which contains from 1 to 10 carbon atoms.

12. Solution according to any one of Claims 1 to 11, **characterized in that** the hydrophilic monomers are chosen from:
- ethylenically unsaturated carboxylic acids;
- neutral hydrophilic monomers such as acrylamide and its derivatives (N-methylacrylamide, N-isopropylacrylamide), methacrylamide, polyethylene glycol methacrylate and polyethylene glycol acrylate;
- anionic hydrophilic monomers such as sodium 2-acrylamido-2-methylpropanesulphonate (SAMPS), sodium styrenesulphonate and sodium vinylsulphonate.

13. Solution according to any one of Claims 1 to 12, **characterized in that** the monomers that can be rendered hydrophilic by hydrolysis are chosen from:
- acrylic and methacrylic esters hydrolysable in acid, such as methyl acrylate, ethyl acrylate, hydroxyethyl acrylate, hydroxyethyl methacrylate and tert-butyl acrylate;
- vinyl acetate hydrolysable into vinyl alcohol units;
- quaternized 2-dimethylaminoethyl methacrylate and acrylate (quatdamma and quatdama);
- acrylamide and methacrylamide.

14. Solution according to any one of the preceding claims, **characterized in that** it is a diblock copolymer or a triblock copolymer having a block water-soluble in nature flanked by two blocks predominantly hydrophobic in nature.

15. Solution according to any one of Claims 1 to 14, **characterized in that** it is a diblock copolymer comprising a block water-soluble in nature and a block predominantly hydrophobic in nature,
- the block water-soluble in nature containing acrylic acid (AA) units and ethyl acrylate (EtA) units and
- the block predominantly hydrophobic in nature containing styrene (St) units and methacrylic acid (MAA) and/or hydroxyethyl methacrylate (HEMA) units.

16. Solution according to the preceding claim, **characterized in that** the block water-soluble in nature comes:
- from the polymerization of methacrylic acid (MAA) and of ethyl acrylate (EtA) in an EtA/MAA weight ratio of between 90/10 and 99/1, and then
- from the hydrolysis of the polymer obtained to a degree of at least 50 mol% and of at most 95 mol%.

17. Solution according to Claim 15 or 16, **characterized in that** the block predominantly hydrophobic in nature comes from the polymerization of a monomer mixture containing at least 80% by weight styrene.

18. Solution according to any one of the preceding claims, **characterized in that** it has a molecular mass of at most 100,000 g/mol.

19. Solution according to one of Claims 1 to 18, **characterized in that** the block copolymers are obtained by a process in which a so-called living or controlled polymerization process is employed.

20. Solution according to Claim 19, **characterized in that** for the process:
1• the following are brought into contact with one another:
- at least one ethylenically unsaturated monomer,
- at least one source of free radicals and
- at least one compound of formula (I): 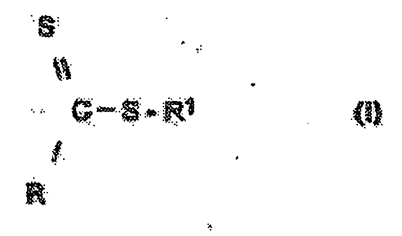
in which:
. **R** represents an R²O-, R²R'²N- or R³- group, where:
**R²** and **R'²**, which are identical or different, represent (i) an alkyl, acyl, aryl, alkene or alkyne group or (ii) a saturated or unsaturated, possibly aromatic, carbocycle or (iii) a saturated or unsaturated heterocycle, these groups and rings (i), (ii) and (iii) possibly being substituted,
. **R³** represents H, Cl, an alkyl, aryl, alkene or alkyne group, a saturated or unsaturated ring, a saturated or unsaturated heterocycle, an alkylthio, alkoxycarbonyl, aryloxycarbonyl, carboxy, acyloxy, carbamoyl, cyano, dialkylphosphonato, diarylphosphonato, dialkylphosphinato or diarylphosphinato group, or a polymer chain,
. R¹ represents (i) an optionally substituted alkyl, acyl, aryl, alkene or alkyne group or (ii) an optionally substituted or aromatic, saturated or unsaturated, carbocycle or (iii) an optionally substituted, saturated or unsaturated, heterocycle, or a polymer chain;
2• the above contacting operation is repeated at least once, using:
- monomers differing from those in the previous operation, and
- instead of the precursor compound of formula (I), the polymer coming from the previous operation; and
3• optionally, the copolymer obtained is hydrolysed.

21. Solution according to Claim 20, **characterized in that** the compound of formula (I) is a dithiocarbonate chosen from compounds of the following formulae (IA), (IB) and (IC): 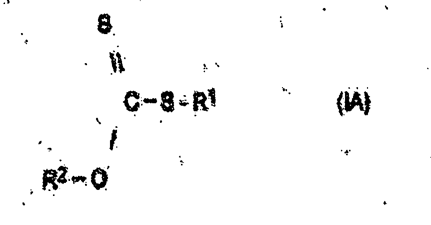 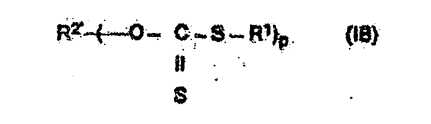 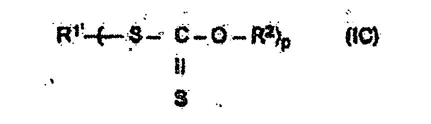 in which:
. **R²** and **R²'** represent (i) an alkyl, acyl, aryl, alkene or alkyne group, or (ii) an optionally aromatic, saturated or unsaturated, carbocycle or (iii) a saturated or unsaturated heterocycle, these groups and rings (i), (ii) and (iii) possibly being substituted;
. **R¹** and **R¹'** represent (i) an optionally substituted alkyl, acyl, aryl, alkene or alkyne group or (ii) an optionally substituted or aromatic, saturated or unsaturated, carbocycle or (iii) an optionally substituted, saturated or unsaturated, heterocycle, or a polymer chain;
. **p** is between 2 and 10.

22. Block copolymer comprising:
- a block water-soluble in nature and containing hydrophobic units; and
- a block predominantly hydrophobic in nature, **characterized in that**:
- this is a diblock copolymer;
- in solution in water it forms a viscoelastic gel;
- the mass ratio of the blocks predominantly hydrophilic in nature to the blocks predominantly hydrophobic in nature is between 90/10 and 40/60;
- the block predominantly hydrophobic in nature comprises styrene units and methacrylic acid units; and
- the block water-soluble in nature comprises acrylic acid units and ethyl acrylate units.

23. Copolymer according to Claim 22, **characterized in that** the block water-soluble in nature has ethyl acrylate hydrophic units in an amount of between 10% and 70% with respect to the acrylic acid hydrophilic units.

## Patentansprüche

1. Wäßrige Lösung, **dadurch gekennzeichnet, daß** sie ein Blockcopolymer mit mindestens einem Block wasserlöslicher Natur mit hydrophoben Einheiten und mindestens einem Block überwiegend hydrophober Natur enthält, wobei das Copolymer eine Konzentration von mindestens 0,1 Gew.-% aufweist, und daß die hydrophobe/hydrophile Struktur des Copolymers so beschaffen ist, daß die Lösung ein viskoelastisches Gel bildet.

2. Lösung nach Anspruch 1, **dadurch gekennzeichnet, daß** der überwiegend hydrophobe Block hydrophile Einheiten in einer Menge von weniger als 25 Gew.-%, vorzugsweise mindestens 1 Gew.-%, noch weiter bevorzugt zwischen 2 und 15%, bezogen auf die hydrophoben Einheiten, aufweist.

3. Lösung nach Anspruch 1 oder 2, **dadurch gekennzeichnet, daß** der Block wasserlöslicher Natur hydrophobe Einheiten in einer Menge von weniger als 70 Gew.-% und mindestens 10 Gew.-%, noch weiter bevorzugt zwischen 50 und 10%, bezogen auf die hydrophilen Einheiten, aufweist.

4. Lösung nach Anspruch 1, **dadurch gekennzeichnet, daß** es sich bei dem Block überwiegend hydrophober Natur um einen völlig hydrophoben Block handelt.

5. Lösung nach einem der Ansprüche 1 bis 3, **dadurch gekennzeichnet, daß** das Massenverhältnis zwischen den Blöcken überwiegend hydrophiler Natur und den Blöcken überwiegend hydrophober Natur zwischen 95/5 und 20/80, vorzugsweise zwischen 90/10 und 40/60, liegt.

6. Lösung nach einem der Ansprüche 1 bis 5, **dadurch gekennzeichnet, daß** das Copolymer in einer Konzentration von mindestens 1 Gew.-% und höchstens 20%, vorzugsweise höchstens 10%, vorliegt.

7. Lösung nach einem der Ansprüche 1 bis 6, enthaltend mindestens einen Block wasserlöslicher Natur und/oder mindestens einen Block überwiegend hydrophober Natur, **dadurch gekennzeichnet, daß** es sich bei mindestens einem dieser Blöcke um ein aus der Copolymerisation von hydrophilen und hydrophoben Monomeren stammendes Copolymer handelt.

8. Lösung nach Anspruch 7, **dadurch gekennzeichnet, daß** die Mengen an hydrophilen und hydrophoben Einheiten in jedem der Blöcke durch ihre jeweiligen Gehalte an hydrophilen Monomeren und hydrophoben Monomeren bei der Polymerisation der Blöcke gesteuert werden.

9. Lösung nach einem der Ansprüche 1 bis 8, enthaltend mindestens einen Block wasserlöslicher Natur und/oder mindestens einen Block überwiegend hydrophober Natur, **dadurch gekennzeichnet, daß** es sich bei mindestens einem der Blöcke um ein aus
- der Polymerisation von Monomeren, die durch Hydrolyse hydrophil gemacht werden können, und gegebenenfalls nicht hydrolysierbaren hydrophoben Monomeren und hydrophilen Monomeren
- und der nachfolgenden Hydrolyse des erhaltenen Polymers stammendes Copolymer handelt.

10. Lösung nach dem vorhergehenden Anspruch, **dadurch gekennzeichnet, daß** die Mengen an hydrophilen und hydrophoben Einheiten in jedem der Blöcke durch die Menge der Monomere, die durch Hydrolyse hydrophil gemacht werden können, und durch den Hydrolysegrad gesteuert werden.

11. Lösung nach einem der Ansprüche 1 bis 10, **dadurch gekennzeichnet, daß** die hydrophoben Monomere ausgewählt sind unter:
- vinylaromatischen Monomeren,
- Diolefinen,
- Alkylacrylaten und -methacrylaten mit 1 bis 10 Kohlenstoffatomen in der Alkylgruppe.

12. Lösung nach einem der Ansprüche 1 bis 11, **dadurch gekennzeichnet, daß** die hydrophilen Monomere ausgewählt sind unter:
- ethylenisch ungesättigten Carbonsäuren,
- neutralen hydrophilen Monomeren wie Acrylamid und seinen Derivaten (n-Methylacrylamid, n-Isopropylacrylamid), Methacrylamid, Polyethylenglykolmethacrylat und Polyethylenglykolacrylat,
- anionischen hydrophilen Monomeren wie Natrium-2-acrylamido-2-methylpropansulfonat (AMPS), Natriumstyrolsulfonat und Natriumvinylsulfonat.

13. Lösung nach einem der Ansprüche 1 bis 12, **dadurch gekennzeichnet, daß** die Monomere, die durch Hydrolyse hydrophil gemacht werden können, ausgewählt sind unter:
- zur Säure hydrolysierbaren Acryl- und Methacrylsäureestern wie Methylacrylat, Ethylacrylat, Hydroxyethylacrylat, Hydroxyethylmethacrylat, tert.-Butylacrylat,
- Vinylacetat, das zu Vinylalkoholeinheiten hydrolysierbar ist,
- quaternisiertem 2-Dimethylaminoethylmethacrylat und -acrylat (Madamquat und Adamquat),
- Acrylamid und Methacrylamid.

14. Lösung nach einem der vorhergehenden Ansprüche, **dadurch gekennzeichnet, daß** es sich um ein Diblockcopolymer oder ein Triblockcopolymer mit einem durch zwei Blöcke überwiegend hydrophober Natur flankierten Block wasserlöslicher Natur handelt.

15. Lösung nach einem der Ansprüche 1 bis 14, **dadurch gekennzeichnet, daß** es sich um ein Diblockcopolymer mit einem Block wasserlöslicher Natur und einem Block überwiegend hydrophober Natur handelt,
- wobei der Block wasserlöslicher Natur Acrylsäureeinheiten (AA-Einheiten) und Ethylacrylateinheiten (EtA-Einheiten) enthält,
- und der Block überwiegend hydrophober Natur Styroleinheiten (St-Einheiten) und Methacrylsäureeinheiten (MAA-Einheiten) und/oder Hydroxyethylmethacrylateinheiten (HEMA-Einheiten) enthält.

16. Lösung nach dem vorhergehenden Anspruch, **dadurch gekennzeichnet, daß** der Block wasserlöslicher Natur aus:
- der Polymerisation von Methacrylsäure (MMA) und Ethylacrylat (EtA) in einem EtA/MMA-Gewichtsverhältnis zwischen 90/10 und 99/1
- und der nachfolgenden Hydrolyse des erhaltenen Polymers bis zu einem Grad von mindestens 50 Mol-% und höchstens 95 Mol-%
stammt.

17. Lösung nach Anspruch 15 oder 16, **dadurch gekennzeichnet, daß** der Block überwiegend hydrophober Natur aus der Polymerisation einer Monomerenmischung, die mindestens 80 Gew.-% Styrol enthält, stammt.

18. Lösung nach einem der vorhergehenden Ansprüche, **dadurch gekennzeichnet, daß** es eine Molmasse von höchstens 100.000 g/mol aufweist.

19. Lösung nach einem der Ansprüche 1 bis 18, **dadurch gekennzeichnet, daß** die Blockcopolymere nach einem Verfahren erhalten werden, bei dem man ein sogenanntes lebendes oder kontrolliertes Polymerisationsverfahren anwendet.

20. Lösung nach Anspruch 19, **dadurch gekennzeichnet, daß** man für das Verfahren:
1•
- mindestens ein ethylenisch ungesättigtes Monomer,
- mindestens eine Radikalquelle und
- mindestens eine Verbindung der Formel (I): 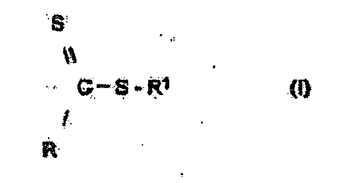
worin:
. R für eine Gruppe R²O-, R²R'²N- oder R³- steht, wobei:
. R² und R'² gleich oder verschieden sind und für (i) eine Alkyl-, Acyl-, Aryl-, Alken- oder Alkingruppe oder (ii) einen gesättigten oder ungesättigten, gegebenenfalls aromatischen Carbocyclus oder (iii) einen gesättigten oder ungesättigten Heterocyclus stehen, wobei diese Gruppen und Ringe (i), (ii) und (iii) substituiert sein können,
. R³ für H, Cl, eine Alkyl-, Aryl-, Alken- oder Alkingruppe, einen gesättigten oder ungesättigten Ring, einen gesättigten oder ungesättigten Heterocyclus, eine Alkylthio-, Alkoxycarbonyl-, Aryloxycarbonyl-, Carboxy-, Acyloxy-, Carbamoyl-, Cyano-, Dialkyl- oder Diarylphosphonato- oder Dialkyl- oder Diarylphosphinatogruppe oder eine Polymerkette steht,
. R¹ für (i) eine gegebenenfalls substituierte Alkyl-, Acyl-, Aryl-, Alken- oder Alkingruppe oder (ii) einen gesättigten oder ungesättigten, gegebenenfalls substituierten oder aromatischen Carbocyclus oder (iii) einen gegebenenfalls substituierten gesättigten oder ungesättigten Heterocyclus oder eine Polymerkette steht,
in Berührung bringt,
2• das vorhergehende Inberührungbringen unter Verwendung von:
- anderen Monomeren als beim vorhergehenden Inberührungbringen und
- dem Polymer aus dem vorhergehenden Inberührungbringen anstelle der Vorläuferverbindung der Formel (I)
mindestens einmal wiederholt,
3• gegebenenfalls das erhaltene Copolymer hydrolysiert.

21. Lösung nach Anspruch 20, **dadurch gekennzeichnet, daß** es sich bei der Verbindung der Formel (I) um ein unter den Verbindungen der folgenden Formeln (IA), (IB) und (IC)ausgewähltes Dithiocarbamat handelt: 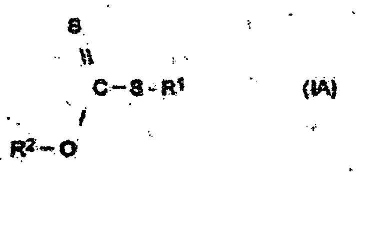 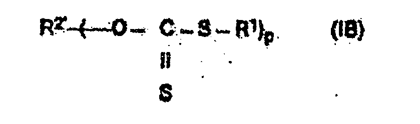 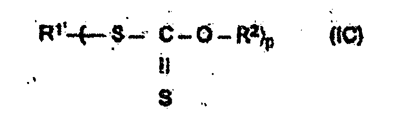 worin:
. R² und R²' für (i) eine Alkyl-, Acyl-, Aryl-, Alken- oder Alkingruppe oder (ii) einen gesättigten oder ungesättigten, gegebenenfalls aromatischen Carbocyclus oder (iii) einen gesättigten oder ungesättigten Heterocyclus stehen, wobei diese Gruppen und Ringe (i), (ii) und (iii) substituiert sein können,
. R¹ und R¹' für (i) eine gegebenenfalls substituierte Alkyl-, Acyl-, Aryl-, Alken- oder Alkingruppe oder (ii) einen gesättigten oder ungesättigten, gegebenenfalls substituierten oder aromatischen Carbocyclus oder (iii) einen gegebenenfalls substituierten gesättigten oder ungesättigten Heterocyclus oder eine Polymerkette stehen,
. p zwischen 2 und 10 liegt.

22. Blockcopolymer mit:
- einem Block wasserlöslicher Natur mit hydrophoben Einheiten und
- einem Block überwiegend hydrophober Natur, **dadurch gekennzeichnet, daß**:
- es sich um ein Diblockcopolymer handelt,
- es in Lösung in Wasser ein viskoelastisches Gel bildet,
- das Massenverhältnis zwischen den Blöcken überwiegend hydrophiler Natur und den Blöcken überwiegend hydrophober Natur zwischen zwischen 90/10 und 40/60 liegt,
- der Block überwiegend hydrophober Natur Styrol- und Methacrylsäureeinheiten enthält,
- der Block wasserlöslicher Natur Acrylsäureeinheiten und Ethylacrylateinheiten enthält.

23. Copolymer nach Anspruch 22, **dadurch gekennzeichnet, daß** der Block wasserlöslicher Natur hydrophobe Ethylacrylateinheiten in einer Menge zwischen 10% und 70%, bezogen auf die hydrophilen Acrylsäureeinheiten, enthält.
